# EUROPEAN PATENT SPECIFICATION

(11) **EP 1 794 247 B1**
(45) Date of publication and mention of the grant of the patent: **16.10.2013**
(21) Application number: 05781629.0
(22) Date of filing: 05.09.2005
(51) Int. Cl.: C09D 129/00, C04B 41/48, C04B 26/28, E04F 13/02, E04F 21/16

(54) **METHOD FOR APPLYING A LAYER OF CELLULOSE MATERIAL**
VERFAHREN ZUM AUFBRINGEN EINER SCHICHT AUS ZELLULOSEMATERIAL
PROCÉDÉ D'APPLICATION D'UN REVÊTEMENT DE MATERIAU CELLULOSIQUE

(30) Priority: 03.09.2004 US 934838
(43) Date of publication of application: 13.06.2007
(73) Proprietor: International Cellulose Corporation, Houston, TX 77045-0006 (US); LUCAS, Brian Ronald, Warlingham, Surrey CR6 9HJ (GB)
(72) Inventor: KEMPE, Steven Allan, Richmond, Texas 77469 (US); WITT, Harry Joe, Richmond, Texas (US); BOYER, William F, Pearland, Texas 77585 (US)
(74) Representative: Lucas, Phillip Brian
(86) International application number: PCT/GB2005/050141
(87) International publication number: WO 2006/024882

(56) References cited:
- EP-A- 0 042 971
- DE-A1- 3 604 948
- DE-A1- 3 606 167
- DE-A1- 4 317 957
- DE-A1- 19 829 962
- FR-A- 2 719 314
- US-A- 4 253 214
- US-B1- 6 737 106
- PATENT ABSTRACTS OF JAPAN vol. 014, no. 536 (M-1052), 27 November 1990 (1990-11-27) & JP 02 225765 A (TOKYO SEIKAN:KK), 7 September 1990 (1990-09-07)

## Description

### BACKGROUND OF THE INVENTION

### Field of the Invention

This invention is directed to: a method for applying cellulose material to a substrate such material being aesthetically pleasing following installation.

### Description of Related Art

A wide variety of spray-on cellulose materials and systems for applying to ceilings, floors, and walls are disclosed in the prior art. U.S. Patents 4,187,983; 4,360,440; 4,923,121; 5,082,563; 5,352,780; 5,429,741; 5,684,068; 5,853,802; 6,251,476; and 6,737,106 provide a sampling of the numerous patents directed to such materials and systems.

Two-component adhesive resins are commonly used with sprayed-on and blown-in fibrous cellulose insulating materials. U.S. Pat. No. 4,187,983 discloses prior art systems for applying fibrous cellulose insulation material with an adhesive. U.S. Pat. No. 4,360,440 discloses insulating fiber mixtures that include water, fibers, and an adhesive that is a combination of sodium silicate and an acrylic resin. U.S. Patents Nos. 5,684,068; 5,853,802; 6,251,476 and 6,737,106 disclose compositions with cellulose fibers.

Further, DE 3604948 A discloses a method for applying a layer of cellulose material on a substrate, the method comprising mixing cellulose fibers, a cellulose ether as first binder and polyvinyl alcohol as second binder in aqueous solution producing a mixture, applying this mixture to a surface of a substrate, the cellulose mixture as applied having an outer surface.

Many cellulose materials are applied in areas that either are never or rarely viewed by people or are in areas in which appearance is not important. Many typical cellulose materials as applied have a rough, pitted, irregular, uneven, gritty, and/or nonuniform surface which would not be suitable for many uses, e.g., but not limited to, for use in many offices, hotels, retail facilities and interior residential rooms. In many such applications, including some that are architecturally demanding, plaster or a plaster-like material is used on walls, partitions, or ceilings. Plaster materials have been used in certain high demand aesthetic applications for many years. Certain of these plasters are typically mixed into a slurry, pumped through a machine, and then applied to or sprayed onto a surface, e.g. a ceiling or wall. Although such uses of plaster are common, there are some drawbacks to certain plaster products and certain application methods in that they tend to be slower to install, require relatively expensive equipment, have relatively low acoustical absorption characteristics, and can be generally difficult to work with.

Previous efforts to provide a cellulose material that, as installed, meets the requirements for these architecturally demanding applications, include efforts to vary the nature and source of raw materials, manufacturing procedures, application techniques, and equipment modifications. One particular effort to provide cellulose material with an acceptable surface included tamping with a flat or planned board pressed into the surface of newly applied material. While this method can result in some reduction of surface texture, it often is time consuming, can require great care on the part of the applicator to apply the "correct" pressure consistently throughout an area, ca be difficult to use on irregular or curved surfaces, and can be relatively slow and labor intensive. Another attempted method was to roll a surface shortly after application of cellulose material with a paint roller or similar rolling tool. This provided some reduction of the texture, but is also very demanding on the part of the applicator for similar reasons as described for tamping. Further, in both cases, should any material adhere to the tamping board or rolling tool (a common undesirable occurrence due to the nature of the material and /or adhesive therein), surface irregularities or damage to the installed material can occur and may be difficult or impossible to repair. Even with a high level of care and expertise, lines, ridges, gouges and/or patterns of tamping or rolling tools used can occur. Both methods can produce uneven results due to the variances in the applied material and the skill and consistency of the applicator or applicators.

In many aspects cellulose insulation can be installed in thicknesses up to 12.5 cm (5 inches) or more, while in certain applications the thickness is below 2.5 cm (1 inch). In some of these applications, the final thickness may be as thin as 0.62 cm (1/4 inch) or less. These thin applications place extremely high demands on the final appearance.

There has long been a need, recognized by the present inventors, for aesthetically pleasing applied cellulose materials and methods for applying and finishing such materials. There has long been such a need, recognized by the present inventors, for methods for applying such materials which are not labor intensive and/or which can be accomplished with uniformity prior to a final set of adhesives in the materials.

### SUMMARY OF THE PRESENT INVENTION

The present invention discloses a method for applying a layer of cellulose material on a substrate, the method including the steps defined in claim 1.

What follows are some of, but not all, the objects of at least certain aspects and embodiments of this invention. In addition to the specific objects stated below for at least certain preferred embodiments of the invention, other objects and purposes will be readily apparent to one of skill in this art who has the benefit of this invention's teachines and disclosures.

It is, therefore, an object of the present invention to provide: a new, useful, unique, efficient, non-obvious applied (e.g. trowelled on or sprayed-on) method of application of cellulose materials.

Features of the invention have been broadly described so that the detailed descriptions that follow may be better understood, and in order that the contributions of this invention to the arts may be better appreciated. Those skilled in the art who have the benefit of this invention, its teachings, and suggestions will appreciate that the conceptions of this disclosure may be used as a creative basis for designing other structures, methods and systems for carrying out and practicing the present invention.

The present invention recognizes and addresses the previously-mentioned problems and long-felt needs and provides a solution to those problems and a satisfactory meeting of those needs in its various possible embodiments and equivalents thereof. To one skilled in this art who has the benefits of this invention's realizations, teachings, disclosures, and suggestions, other purposes and advantages will be appreciated from the following description of preferred embodiments, given for the purpose of disclosure, when taken in conjunction with the accompanying drawings. The detail in these descriptions is not intended to thwart this patent's object to claim this invention no matter how others may later disguise it by variations in form or additions of further improvements.

### DESCRIPTION OF THE DRAWINGS

A more particular description of embodiments of the invention briefly summarized above may be had by references to the embodiments which are shown in the drawings which form a part of this specification.
Fig. 1 is a schematic view of a prior art cellulose material application method.
Fig. 2A is a top view of a finishing tool which may be used in the present invention. Fig. 2B is a side view of the finishing tool of Fig. 2A. Fig. 2C is a partial cross-section view of the tool of Fig. 2A.
Fig. 3A is a top view of a finishing tool which may be used in the present invention. Fig. 3B is a side view of the finishing tool of Fig. 3A. Figs. 3C and 3D are in cross-section views of the finishing tool of Fig. 3A.
Fig. 4A is a top view of a finishing tool which may be used in the present invention. Fig. 4B is a side view of the finishing tool of Fig. 4A.
Fig. 5 is a top view of a variety of shapes, as viewed from above, for finishing tools which may be used in the present invention.
Figs. 6A, 6B and 6D are cross-section views of tools which may be used in the present invention. Fig. 6C is a top view of the tool of Fig. 6D.
Fig. 7 is a Table presenting analyses of cellulose mixtures.

### DESCRIPTION OF PREFERRED EMBODIMENTS

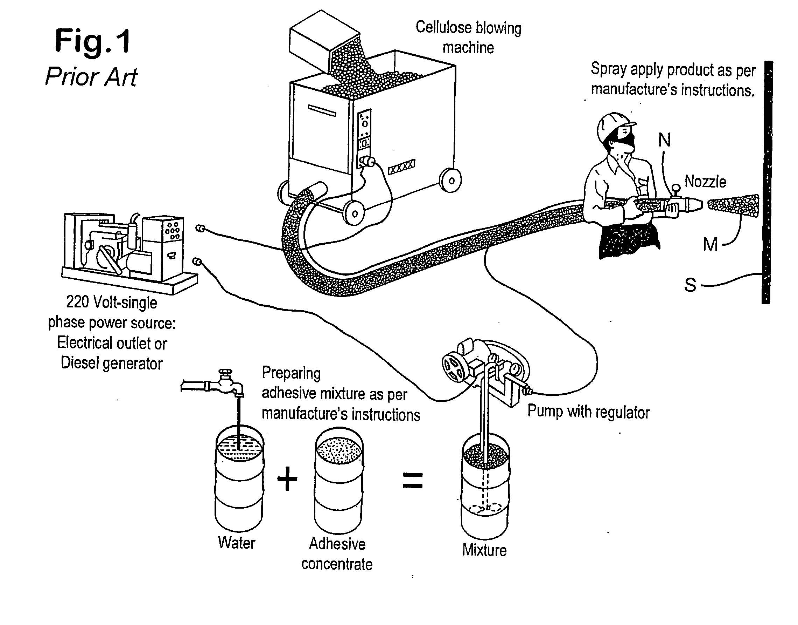

Fig. 1 shows one typical prior art system for spraying cellulose material M through a nozzle apparatus N onto a substrate S.

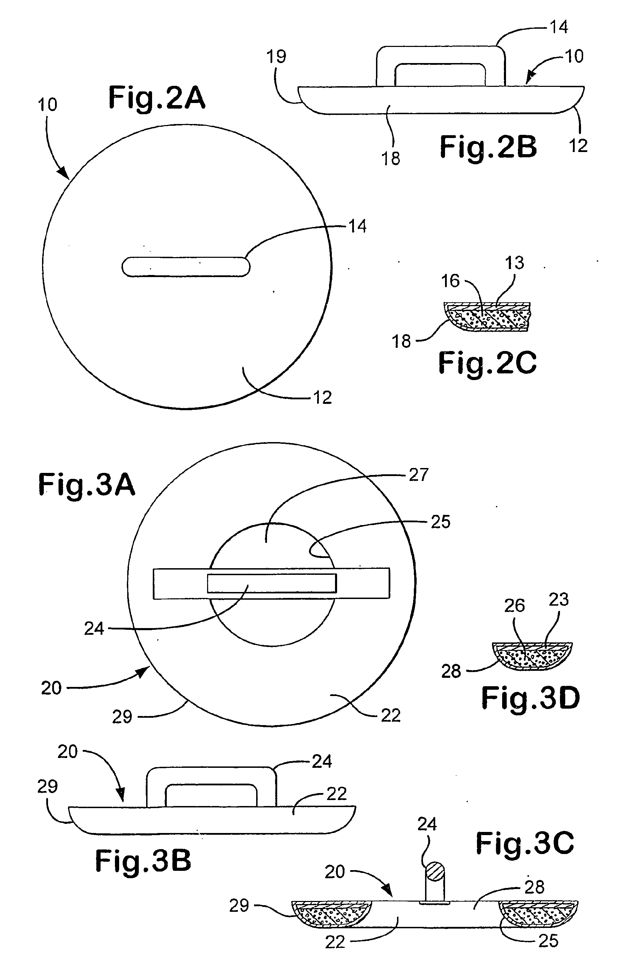

Figs. 2A, 2B and 2C show a finishing tool 10 which may be used in the present invention which has a base 12 with a base member 13, a handle 14, a foam layer 16 (optional as is any foam or cushion layer or portion herein) and a vinyl covering 18. The handle 14 may be a separate piece connected to the base 12 or it may be formed integrally of the base 12. The foam layer may be connected to the base with fasteners (e.g., but not limited to screws, brads, or staples) and/or it may be glued or adhered to the base 12. Although it is possible to have a base with squared edges, the base 12 as shown has a curved outer edge 19.

Figs. 3A - 3D show a finishing tool 20 which may be used in the present invention which has a base 22 with a base member 23, a handle 24, a cushion layer 26, and a vinyl covering 28. The tool 20 is similar to the tool 10, but the base 22 has a cut out portion 23 and an inner curved edge 25. The base 22 has a curved outer edge 29. Movement of the tool 20 over an amount of applied cellulose material results in both edges 29 and 25 moving on the material so that two edges rather than one smooth the surface of the material in a back-and-forth pass of the tool over applied cellulose.

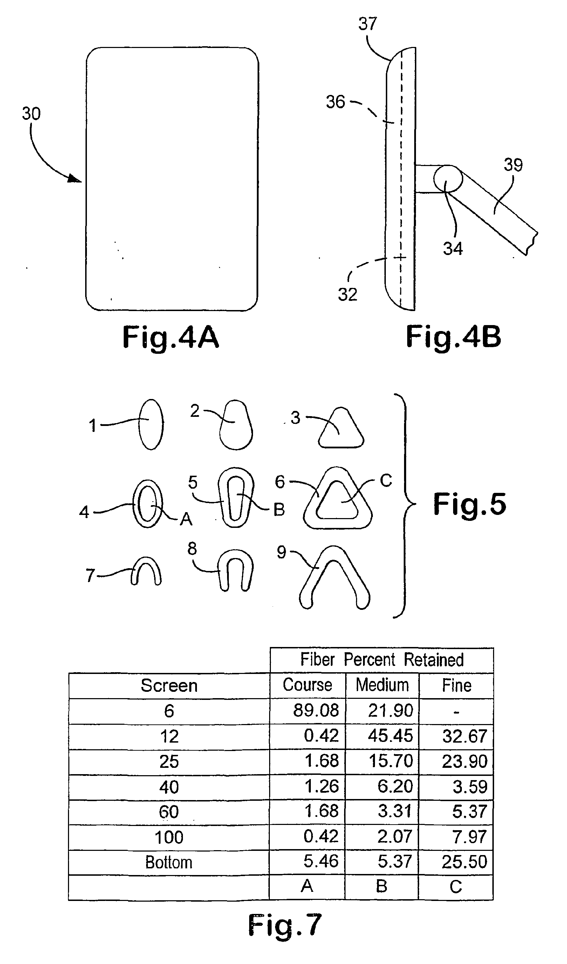

Figs. 4A and 4B show a finishing tool 30 which may be used in the present invention which has a base 32, a pivotable joint connector 34, a foam layer 36 and a shaft 39 releasably connected to the joint connector 34. The shaft 39 may be any desired shape in cross-section and may be any desired length, and may, optionally, include multiple telescoping parts. The base 32 has a curved outer edge 37.

Fig. 5 shows top views of shapes 1 - 9 for finishing tools which may be used in the present invention, some with cut out portions A, B, C and some (7 - 9) with spaced apart ends. Such tools may have any base, covering, handle, and/or air pocket(s) as disclosed herein.

According to the present invention a cellulose material used in a method according to the present invention, has a workability or smoothability which is enhanced as compared to certain prior art materials by adding a gelling material, e.g. borax, borates, potassium sulfate, sodium, and/or sodium bicarbonate to a polyvinyl-alcohol-adhesive used in the cellulose material and using cellulose fibers containing treated with boric acid (e.g. as described in U.S. Patents 6,737,106 and 6,251,476). In one particular embodiment of such a cellulose material, a relatively high viscosity partially hydrolyzed grade polyvinyl alcohol is used, e.g., but not limited to, commercially available DuPont Company 50-42 adhesive. The polyvinyl alcohol adhesive is blended with water to form an adhesive mixture prior to use and then the adhesive mixture is added to sprayed cellulose material during application at a controlled and, in one aspect, predetermined rate. Adhesive mixtures in certain aspects include from 3 parts water to 10 or more parts water per one part of adhesive concentrate. Add on rates of the adhesive mixture per each kilogram (pound) of cellulose fiber, in certain aspects, may range from less than 0.84 litres/kg (0.10 gallon per pound) to 2.7 litres/kg (0.32 gallons per pound). It may also be desirable to vary and adjust these ratios to accommodate specific material and end-use parameters.

In certain aspects by combining polyvinyl-alcohol-containing adhesive mixture with boric-acid treated cellulose fibers containing a level of gelling agent such a borax, the level of adhesive mixture add on can be increased to a level of 3.5 litres/kg (0.42 gallons of adhesive mixture per pound) of cellulose fiber, an increase of over 30% as compared to certain previously recommended mixtures for certain acoustical applications. A resulting increase in initial wetness produces desired characteristics while diminishing problems associated with too high of an add on rate. It is believed that this is made possible by the fact that the proper gelling of the adhesive mixture binds up additional water thereby preventing or reducing undesirable consequences of too much water used in an application. In certain aspects an add on level of total material in a mixture by weight ("total material mixture" includes the fibers plus all additions; in one aspect, the fibers, borax, and boric acid) to treated cellulose fiber is approximately 18 - 20% the level of borax by weight is 4% or greater than 4% (e.g. 4% to 14%); and boric acid is less than 16% by weight of the total mixture.

The actual physical size of the cellulose fibers can affect the workability and final appearance. In prior art methods applied cellulose material is used for a wide range of thermal, acoustical, and insulation purposes. In certain applications the material is used as an acoustical finish in environments in which the appearance is far more demanding such as in a church, conference room, classroom, etc. In these applications a typical thickness is 1.2 cm (0.5 pinches) whereas in many thermal or more general purpose applications the thickness is 5, 7.5 or even 12.5 cm (2, 3 or even 5 inches). In order to address the demands of aesthetic qualities for certain applications with methods according to the present invention, the fiber size of cellulose fibers in a fibrous mixture may be relatively small when compared to that which is better suited for applications of greater thickness.

The ability to smooth out ("workability") a surface of applied cellulose material, is related to the size-of pieces of the cellulose material. The pieces of cellulose material used in the present invention are fibrous, and workability depends on fiber size and percentages (by weight) of various different size fibers which are in a particular mixture. Sieve analysis yields a measurement of various fiber sizes of the fibers in a particular mixture. For example a screen with a sieve number "6" (see, e.g. Fig. 7, column designated "Screen") has a #6 mesh which means six holes per linear inch each hole with an opening of 0.132' (3.36 mm; 3360 microns). As an example, if a material is described as " - 40 mesh", 90% or more of the material introduced to it passes through a 40 Mesh sieve (particles are smaller than 0.0165", 0.420 mm, 420 microns).

As shown in Fig. 7, three cellulose fiber mixtures, A, B, C, useful in embodiments of the present invention have been subjected to sieve analysis. The designations "Coarse, "Medium," and "Fine" are general characterizations of the majority of fibers in a particular mixture. With respect to workability, the mixture C designated "Fine" was found to have the best workability with over 50% of its fibers passing through a No. 6 sieve. In particular aspects of such fiber mixtures according to the present invention, all the fibers pass through a No. 6 sieve and more than 50%, more than 55%, or more than 60% of the fibers pass through a No. 12 sieve. In other aspects at least 75% of the fibers pas through a No. 6 sieve. "Bottom" refers to a bottom pan or receptacle which catches materials small enough to pass through all sieves above it. "Fiber Percent Retained" is the percentage of fibers in a fibrous cellulose mixture which are retained on (do not pass through) a given sieve. The entries in the "Screen" column are numerical values for Tyles Equivalent Mesh values. According to the present invention at least 30% of the fibers in a fibrous cellulose mixture can pass through a No. 12 Mesh sieve.

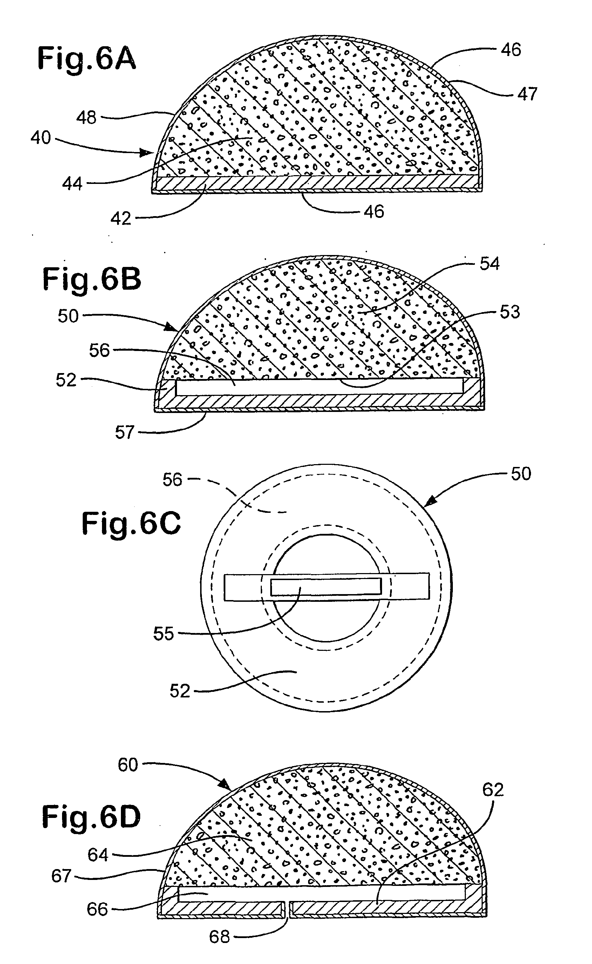

Fig. 6A shows a cross-section of a portion of a finishing tool 40 which may be used in the present invention. The tool 40 has a base 42 on which is mounted, placed and/or connected (e.g. glued or adhered) a cushion portion 44. In certain aspects (as is true for any cushion part, portion or pad) the cushion portion 44 is made of flexible foam, rubber, rubberized fibers, flexible plastic, down, Kapok, flexible glass fibers, or the like. A smooth covering 46, e.g. vinyl or polyurethane sheet or film, encompasses the cushion portion 44 and the base 42 (although such a covering on the base 42, as will all bases of all embodiments herein, is optional). The shape (viewed in cross-section as in Fig. 6A) presents two curved edges 47, 48 for contacting applied cellulose.

Figs. 6B and 6C show a tool 50, similar to the tool 40, but with an air pocket 56 which encircles part of a base 52 and which has a boundary defined by a lower surface 53 of a cushion portion 54. It is possible to provide, one, two, three, or more or a large multiplicity of air pockets adjacent and/or within a cushion portion or pad of any tool which may be used in the present invention. The tool 50 has a vinyl covering 57 and a handle 55.

Fig. 6D shows a tool 60 which may be used in the present invention, similar to the tool 50, but with at least one air vent 68 through which air can pass from an air pocket 66 when pressure is applied to the tool 60. The vent (or vents) 68 are, in one aspect, sized to permit gradual collapse of the air pocket 66 during a smoothing pass over a surface of applied cellulose material. The tool 60 has a base 62, a cushion member 64, and a vinyl covering 67.

Coverings which may be used in the present invention are, in certain aspects, tight fitting and wrinkle-free. Coverings may be applied to bases and/or to cushion portions or pads by processes including: lamination; adhesion; coating; or film-forming.

The present invention provides a method for applying a layer of cellulose material on a substrate, the method including the steps defined in claim 1. Such a method may include one or some (in any possible combination) of the following:
wherein the finishing tool's base has a central cut out portion extending through the base, the central cut out portion having an interior edge defined by the base, the interior edge having a curved shape and the base having an outer peripheral edge with a curved shape, the method further including moving the finishing tool back and forth on the outer surface of the cellulose mixture so that in so moving both curved edges facilitate smoothing of the outer surface;
wherein the finishing tool's base has two spaced-apan ends;
wherein the finishing tool includes a cushion layer (e.g. pad, foam portion) between the base and the covering over the base; wherein the ratio by volume of water to adhesive in the aqueous solution containing adhesive is between 3:1 to 10:1;
wherein between 0,84 litres and 2,7 litres of mixed adhesive is used per kilogram of cellulose (0.10 gallons and 0.32 gallons of mixed adhesive is used per pound of cellulose);
wherein about 3,5 litres of adhesive in aqueous solution is used per kilogram of cellulose (0.42 gallons of adhesive in aqueous solution is used per pound of cellulose)
wherein the cellulose mixture is applied by spraying it onto the substrate;
wherein the cellulose mixture is applied to the substrate manually, e.g., with a trowel;
wherein the cellulose is fibrous cellulose fibers and at least 50% of the fibers pass through a No. 12 mesh sieve to enhance workability of the cellulose mixture with the finishing tool;
wherein the cellulose is fibrous cellulose fibers and at least 75% of the fibers pass through a No. 6 mesh sieve to enhance workability of the cellulose mixture with the finishing tool; and/or
wherein the cellulose is fibrous cellulose fibers and at least 40% of the fibers pass through a No. 25 mesh sieve to enhance workability of the cellulose mixture with the finishing tool.

In conclusion, therefore, it is seen that the present invention and the embodiments disclosed herein and those covered by the appended claims are well adapted to carry out the objectives and obtain the ends set forth.

## Claims

1. A method for applying a layer of cellulose material on a substrate, the method comprising
adding water and a gelling material to a polyvinyl alcohol adhesive forming an adhesive mixture,
treating cellulose with boric acid forming treated cellulose material, wherein the cellulose is fibrous cellulose comprising cellulose fibers and at least 30% of the fibers pass through a No. 12 mesh sieve to enhance workability of the cellulose mixture with a finishing tool,
mixing the treated cellulose material with the adhesive mixture producing a cellulose mixture,
applying the cellulose mixture to a surface of a substrate, the cellulose mixture as applied having an outer surface, and
smoothing the outer surface of the cellulose mixture with a finishing tool, the finishing tool comprising a base including a smooth non-permeable portion, the smooth non-permeable portion for contacting, pressing against, and moving on the outer surface of the cellulose mixture as applied.

2. The method of claim 1, wherein the finishing tool's base has a central cut out portion extending through the base, the central cut out portion having an interior edge defined by the base, the interior edge having a curved shape and the base having an outer peripheral edge with a curved shape, the method further comprising moving the finishing tool back and forth on the outer surface of the cellulose mixture so that in so moving both curved edges facilitate smoothing of said outer surface.

3. The method of claim 1 or 2, wherein the finishing tool's base has two spaced-apart ends.

4. The method of any preceding claim, wherein the finishing tool includes a cushion layer adjacent the base beneath the smooth non-permeable portion.

5. The method of any preceding claim, wherein the ratio by volume of water to adhesive in the adhesive mixture is between 3:1 to 10:1.

6. The method of any preceding claim, wherein between 0,84 litres and 2,7 litres of adhesive mixture is used per kilogram of cellulose (between 0.10 gallons and 0.32 gallons of adhesive mixture is used per pound of cellulose).

7. The method of any of claims 1-5 wherein about 3,5 litres of adhesive mixture is used per kilogram of cellulose (about 0.42 gallons of adhesive mixture is used per pound of cellulose).

8. The method of any preceding claim, wherein the cellulose mixture is applied by spraying it onto the substrate.

9. The method of any of claims 1-7, wherein the cellulose mixture is applied to the substrate manually.

10. The method of any preceding claim, wherein the cellulose is fibrous cellulose comprising cellulose fibers and at least 50% of the fibers pass through a No. 12 mesh sieve to enhance workability of the cellulose mixture with the finishing tool.

11. The method of any of claims 1-9, wherein the cellulose is fibrous cellulose comprising cellulose fibers and at least 75% of the fibers pass through a No. 6 mesh sieve to enhance workability of the cellulose mixture with the finishing tool.

12. The method of any of claims 1-9, wherein the cellulose is fibrous cellulose comprising cellulose fibers and at least 40% of the fibers pass through a No. 25 mesh sieve to enhance workability of the cellulose mixture with the finishing tool.

## Patentansprüche

1. Verfahren zum Auftragen einer Schicht aus Zellulosematerial auf einem Substrat, wobei das Verfahren umfasst:
Zugeben von Wasser und eines Geliermaterials zu einem Polyvinylalkohol-Klebstoff, wodurch eine Klebstoffmischung entsteht,
Behandeln von Zellulose mit Borsäure, wodurch ein behandeltes Zellulosematerial entsteht, wobei die Zellulose faserförmige Zellulose ist, welche Zellulosefasern umfasst und mindestens 30% der Fasern durch ein Nr. 12 Maschensieb hindurchgehen, um die Bearbeitbarkeit der Zellulosemischung mit einem Endbearbeitungswerkzeug zu verbessern,
Mischen des behandelten Zellulosematerials mit der Klebstoffmischung, wodurch sich eine Zellulosemischung ergibt,
Auftragen der Zellulosemischung auf eine Oberfläche eines Substrats, wobei die aufgetragene Zellulosemischung eine äußere Oberfläche aufweist, und
Glätten der äußeren Oberfläche der Zellulosemischung mit einem Endbearbeitungswerkzeug, wobei das Endbearbeitungswerkzeug eine Basis mit einem glatten undurchlässigen Teil umfasst, wobei der glatte undurchlässige Teil zum Kontaktieren, Andrücken und Bewegen auf der äußeren Oberfläche der aufgetragen Zellulosemischung verwendet wird.

2. Verfahren nach Anspruch 1, wobei die Basis des Endbearbeitungswerkzeugs eine zentrale Aussparung aufweist, die sich durch die Basis erstreckt, wobei die zentrale Aussparung eine innere Kante aufweist, die durch die Basis definiert wird, wobei die innere Kante eine gekrümmte Form aufweist und die Basis eine äußere periphere Kante mit gekrümmter Form aufweist, wobei das Verfahren ferner ein hin- und her Bewegen des Endbearbeitungswerkzeugs auf der äußeren Oberfläche der Zellulosemischung umfasst, so dass bei diesem Bewegen die beiden gekrümmten Kanten das Glätten der äußeren Oberfläche erleichtern.

3. Verfahren nach Anspruch 1 oder 2, wobei die Basis des Endbearbeitungswerkzeugs zwei räumlich getrennte Enden aufweist.

4. Verfahren nach irgendeinem der vorhergehenden Ansprüche, wobei das Endbearbeitungswerkzeug eine Polsterschicht, angrenzend an die Basis, unter dem glatten undurchlässigen Teil, enthält.

5. Verfahren nach irgendeinem der vorhergehenden Ansprüche, wobei das Volumenverhältnis von Wasser zu Klebstoff in der Klebstoffmischung zwischen 3:1 und 10:1 beträgt.

6. Verfahren nach irgendeinem der vorhergehenden Ansprüche, wobei zwischen 0,84 Liter und 2,7 Liter Klebstoffmischung pro Kilogramm Zellulose (zwischen 0,1 Gallone und 0,32 Gallonen Klebstoffmischung pro Pfund Zellulose) verwendet werden.

7. Verfahren nach einem der Ansprüche 1-5, wobei etwa 3,5 Liter Klebstoffmischung pro Kilogramm Zellulose (etwa 0,42 Gallonen Klebstoffmischung pro Pfund Zellulose) verwendet werden.

8. Verfahren nach irgendeinem der vorhergehenden Ansprüche, wobei die Zellulosemischung durch Sprühen auf das Substrat aufgetragen wird.

9. Verfahren nach einem der Ansprüche 1-7, wobei die Zellulosemischung manuell auf das Substrat aufgetragen wird.

10. Verfahren nach irgendeinem der vorhergehenden Ansprüche, wobei die Zellulose faserförmige Zellulose ist, welche Zellulosefasern umfasst und mindestens 50% der Fasern durch ein Nr. 12 Maschensieb hindurchgehen, um die Bearbeitbarkeit der Zellulosemischung mit dem Endbearbeitungswerkzeug zu verbessern.

11. Verfahren nach einem der Ansprüche 1-9, wobei die Zellulose faserförmige Zellulose ist, welche Zellulosefasern umfasst und mindestens 75% der Fasern durch ein Nr. 6 Maschensieb hindurchgehen, um die Bearbeitbarkeit der Zellulosemischung mit dem Endbearbeitungswerkzeug zu verbessern.

12. Verfahren nach einem der Ansprüche 1-9, wobei die Zellulose faserförmige Zellulose ist, welche Zellulosefasern umfasst und mindestens 40% der Fasern durch ein Nr. 25 Maschensieb hindurchgehen, um die Bearbeitbarkeit der Zellulosemischung mit dem Endbearbeitungswerkzeug zu verbessern.

## Revendications

1. Procédé d'application d'une couche de matériau cellulosique sur un substrat, le procédé comprenant
l'addition d'eau et d'un matériau de gélification à un adhésif de poly(alcool vinylique) pour former un mélange adhésif,
le traitement de la cellulose avec de l'acide borique pour former un matériau cellulosique traité, où la cellulose est une cellulose fibreuse comprenant des fibres de cellulose et au moins 30 % des fibres passent à travers un tamis à maille N°12 pour améliorer la maniabilité du mélange cellulosique avec un outil de finition,
le mélange du matériau cellulosique traité avec le mélange adhésif pour produire un mélange cellulosique,
l'application du mélange cellulosique à une surface d'un substrat, le mélange cellulosique tel qu'appliqué ayant une surface externe, et
le lissage de la surface externe du mélange cellulosique avec un outil de finition, l'outil de finition comprenant une base incluant une portion non perméable lisse, la portion non perméable lisse étant destinée à entrer en contact, presser contre, et se déplacer sur la surface externe du mélange cellulosique tel qu'appliqué.

2. Procédé selon la revendication 1, dans lequel la base d'outil de finition comporte une portion ajourée centrale s'étendant à travers la base, la portion ajourée centrale ayant un bord intérieur défini par la base, le bord intérieur ayant une forme courbée et la base ayant un bord périphérique externe avec une forme courbée, le procédé comprenant en outre le déplacement de l'outil de finition vers avant et l'arrière sur la surface externe du mélange cellulosique de sorte qu'en déplaçant ainsi les deux bords courbés, le lissage de ladite surface externe est facilité.

3. Procédé selon la revendication 1 ou 2, dans lequel la base de l'outil de finition comporte deux extrémités espacées l'une de l'autre.

4. Procédé selon l'une quelconque des revendications précédentes, dans lequel l'outil de finition comprend une couche d'amortissement adjacente à la base sous la portion non perméable lisse.

5. Procédé selon l'une quelconque des revendications précédentes, dans lequel le rapport en volume entre l'eau et l'adhésif dans le mélange adhésif est entre 3:1 et 10:1.

6. Procédé selon l'une quelconque des revendications précédentes, dans lequel entre 0,84 litre et 2,7 litres de mélange adhésif sont utilisés par kilogramme de cellulose (entre 0,10 gallon et 0,32 gallon de mélange adhésif sont utilisés par livre de cellulose).

7. Procédé selon l'une quelconque des revendications 1 à 5, dans lequel environ 3,5 litres de mélange adhésif sont utilisés par kilogramme de cellulose (environ 0,42 gallon de mélange adhésif sont utilisés par livre de cellulose).

8. Procédé selon l'une quelconque des revendications précédentes, dans lequel le mélange cellulosique est appliqué en le pulvérisant sur le substrat.

9. Procédé selon l'une quelconque des revendications 1 à 7, dans lequel le mélange cellulosique est appliqué au substrat manuellement.

10. Procédé selon l'une quelconque des revendications précédentes, dans lequel la cellulose est de la cellulose fibreuse comprenant des fibres de cellulose et au moins 50 % des fibres passent à travers un tamis à maille N°12 afin d'améliorer la maniabilité du mélange cellulosique avec l'outil de finition.

11. Procédé selon l'une quelconque des revendications 1 à 9, dans lequel la cellulose est de la cellulose fibreuse comprenant des fibres de cellulose et au moins 75 % des fibres passent à travers un tamis à maille N°6 afin d'améliorer la maniabilité du mélange cellulosique avec l'outil de finition.

12. Procédé selon l'une quelconque des revendications 1 à 9, dans lequel la cellulose est de la cellulose fibreuse comprenant des fibres de cellulose et au moins 40 % des fibres passent à travers un tamis à maille N°25 afin d'améliorer la maniabilité du mélange cellulosique avec l'outil de finition.
